# EUROPEAN PATENT SPECIFICATION

(11) **EP 2 080 674 B1**
(45) Date of publication and mention of the grant of the patent: **23.03.2011**
(21) Application number: 08100482.2
(22) Date of filing: 15.01.2008
(51) Int. Cl.: B60R 21/01, G07C 5/08

(54) **Emergency system for a vehicle**
Notfallsystem für ein Fahrzeug
Système d'urgence pour véhicule

(43) Date of publication of application: 22.07.2009
(73) Proprietor: SMR Patents S.à.r.l., 1653 Luxembourg (LU)
(72) Inventor: Wilfinger, Kurt, 71563 Affalterbach (DE)
(74) Representative: Rausch, Gabriele

(56) References cited:
- US-A1- 2005 230 947

## Description

### BACKGROUND OF THE INVENTION

This invention relates to an emergency reporting network system for vehicles such as automotive vehicles. This invention also relates to a security device used in an emergency reporting network system.

### DESCRIPTION OF THE RELATED ART

A known emergency communication apparatus for a vehicle is automatically started when the vehicle causes an accident. The known apparatus can also be started when a trigger button is depressed by vehicle's driver (a user). After the start, the known apparatus calls an emergency report receiving center by radio and hence tries to connect with the center. When the radio connection with the center has been established, the known apparatus implements emergency data communication (or emergency speech communication) with the center.

From the US 6337641 an emergency reporting apparatus for a vehicle is known. The emergency reporting apparatus comprises a communication device and means for, in cases where an emergency occurs in the vehicle, using the communication device to report the emergency to an emergency report receiving center. The emergency reporting apparatus informs a user of an operating condition of the communication device when the communication device is used by the first means.

US2005/230947 describes a vehicle security system which transmits picture information of the vehicle interior to the emergency centre.

According the known apparatus sent voice signals and sensor signals to be received at the receiving centre.

The normal sensor data and potential voice data are insufficient, if in case of an accident a rescue operation should be started. For an efficient rescue planning a video image of the situation of the persons in vehicle is helpful.

Generating video signals from the interior of a vehicle is also known. In the EP1298013 a system to supervise the interior and to detect persons on the seats of the vehicle is disclosed. The video signal is used to avoid air back explosions around empty seats. The video signal is not used outside the vehicle but in the inside system to control the security features.

The GB 2358325 discloses a video camera system that sends signals via a GSM link to a network. The camera is a forward looking camera to publish the live stream of a driving vehicle. The system is not incorporated into a security system

### SUMMARY OF THE INVENTION

It is a first object of this invention to provide an improved emergency reporting network system able to receive vehicle interior images and to send them to an emergency centre.

It is a second object of this invention to provide an improved security device in an emergency reporting network system installed in a car.

The security device has the advantage that in case of accident better information can be provided to the emergency centre. The video camera allows sending the video data in case of accident to the centre, so that the emergency service teams have an overview about the situation of persons in the vehicle. This allows a better and well adapted deployment of resources as for example a helicopter or ambulances.

### BRIEF DESCRIPTION OF THE DRAWINGS

FIG. 1 is a block diagram of an emergency reporting apparatus according to a first embodiment of this invention.
FIG.2 and 3 shows embodiments of the position of a video sensor.
FIG. 4 is a flow diagram of the security system

### DESCRIPTION OF THE PREFERRED EMBODIMENTS

An emergency system includes emergency device which are mounted as security device on vehicles respectively. The emergency system also includes an emergency centre which operates as a host apparatus and receives the emergency messages. The security device can be connected with the emergency centre via a radio communication network such as a mobile telephone network, a GSM or a UMTS, a EDGE network or another air interface network as a dedicated short range connection with a beacon system along the streets.

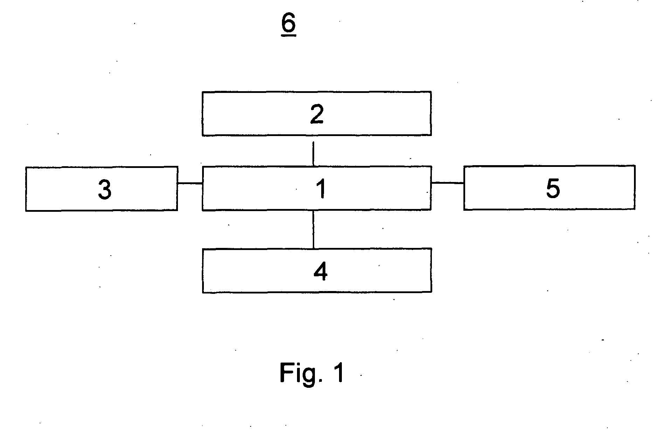

FIG. 1 shows a security device according to a first embodiment of this invention. The security device is at least partly hidden mounted on a vehicle such as an automotive vehicle.

As shown in FIG. 1 a security device 6 includes a microcontroller 1 , a GPS receiver device 2, an accident detector 3, an video input device 4 and, and a communication device 5.

The accident detector 3 is connected to the controller 1. The controller 1 is connected to the GPS receiver 2. The controller 1 is also connected to the communication device 5, the accident detector 3 and the video input device 4.

The accident detector 3 includes a collision sensor for detecting a collision of the related vehicle with another object, or a crash sensor for detecting a crash of the related vehicle against another object. When the accident detector 3 detects the occurrence of an accident caused by the related vehicle, the accident detector 3 outputs an accident-occurrence indicating signal to the controller 1. Thus, the accident detector 3 informs the controller 1 of the occurrence of an accident caused by the related vehide.

The controller 1 includes a microcomputer, a CPU, or a similar device having a combination of an input/output port, a signal processing section, a RAM, and a ROM and a memory. The controller 1 operates in accordance with a program stored in the ROM. The memory is accessed by the controller 1. A signal representing the current position of the related vehicle is stored into the memory by the controller 1. The vehicle position signal can be read out from the memory by the controller 1.

The GPS (Global Positioning System) receiver 2 works as positioning sensor for substantially continuously detecting the current position of the related vehicle. The GPS receiver 2 informs the controller 1 of the detected current position of the related vehicle.

The communication device 5 includes a radio transceiver, a radio communication device, or a mobile telephone set which can be controlled by the controller 1. The communication device 5 can output and feed a radio signal to the antenna. The radio signal is radiated by the antenna. The radiated radio signal can propagate to an emergency report receiving center (not shown). The antenna can receive a radio signal from the emergency report receiving center. The received radio signal is fed from the antenna to the communication device 5. In this way, the communication device 5 can communicate with the emergency center by radio. Furthermore, the communication device 5 can communicate with a base station of a communication network by radio.

The video input senor 4 is a common CCD sensor with an internal possibility to reduce data by compression methods. A wide variety of methods are used to compress video streams. Video data contains spatial and temporal redundancy, making uncompressed video streams extremely inefficient. Broadly speaking, spatial redundancy is reduced by registering differences between parts of a single frame; this task is known as intra frame compression and is closely related to image compression. Likewise, temporal redundancy can be reduced by registering differences between frames; this task is known as inter frame compression, including motion compensation and other techniques. The most common modern standards are MPEG-2, used for DVD and satellite television, and MPEG-4.

The security device in FIG. 1 operates as follows. The GPS receiver 2 substantially continuously detects the current position of the related vehicle. The GPS receiver 2 generates data of the detected current vehicle position. The GPS receiver 2 outputs the data of the detected current vehicle position to the controller 1. The GPS receiver 2 may further include a gyro-based direction sensor and a vehicle speed sensor. The controller 1 writes the data of the current vehicle position into the memory. The current vehicle position data in the memory are updated in accordance with the lapse of time.

Upon the occurrence of an accident caused by the related vehicle, the accident detector 3 outputs an accident-occurrence indicating signal to the controller 1.

The controller 1 feeds a signal of a connection requirement to the communication device 5 in response to the accident-occurrence indicating signal. Thereby, the controller 1 requires the communication device 5 to execute a step of establishing radio connection with the emergency center.

The communication device 5 generates a radio connection requirement signal in response to the connection requirement fed from the controller 1. The communication device 2 outputs the radio connection-requirement signal to the antenna. The radio connection-requirement signal is radiated by the antenna before propagating to the emergency center. When the emergency center is unoccupied and is able to accept radio communication, the emergency report receiving center returns a radio answer signal in response to the radio connection-requirement signal. The radio answer signal is received by the antenna. The received radio answer signal is fed from the antenna to the communication device 52. The radio answer signal fed to the communication device 5 represents that radio connection between the communication device 5 and the emergency center has been established. The communication device 5 informs the controller 1 of the establishment of radio connection between the communication device 5 and the emergency center.

Immediately after the controller 1 is informed of the establishment of radio connection, the controller 1 reads out the data of the current vehicle position from the memory. The controller 1 feeds the data of the current vehicle position to the communication device 5. The controller 1 controls the communication device 5, thereby transmitting the data of the current vehicle position from the communication device 5 to the emergency center by radio on a data communication basis.

After this step or parallel to this process step the controller 1 starts the video input sensor 4, which is a sleep mode. Video input sensor 4 records the pictures of the users of the vehicle and bring them into a compressed data form. The compressed data are fed to the controller and to the communication device 5. The communication device sent the compressed video data stream via the antenna to the emergency center.

In the case where the radio connection between the communication device 5 and the emergency center is cut off, that is, in the case where the communication device 5 and the emergency center are disconnected from each other, the communication device 5 informs the controller 1 of the disconnection. The controller restart the program to establish a connection to emergency center again.

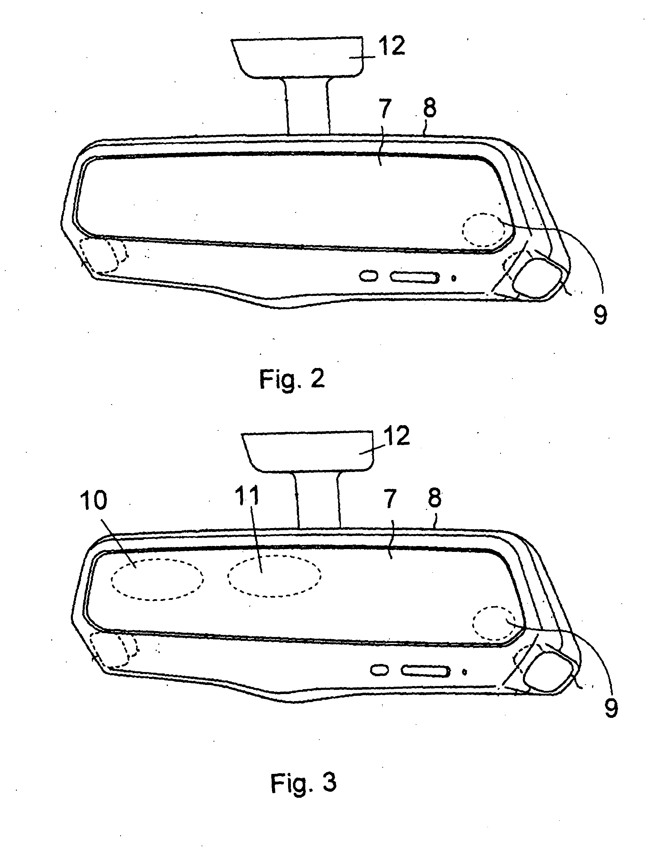

FIG. 2 Shows an embodiment of the invention. An interior rear view mirror8 is installed in each vehicle. The interior mirror has a reflective surface7 in a bezel of plastic which established the housing of the interior mirror. The interior mirror includes a video sensor 9 at a random position on or at the mirror. The position of the video sensor is defined by an optimized view of the sensor to allow seeing all passengers in one picture. An alternative position of the video sensor 9 is behind the reflecting surface which is in this case a semi transparent for the video sensor at least at the sensor's position. The use of a hidden video sensor 9 behind the reflecting surface is mainly recommended when a self dimming mirror is installed.

Fig. 3 shows also an interior mirror. In addition in this embodiment a GPS module 10 and a GSM module 11 is installed in the interior mirror. Via the mirror base 12 the electrical connections to the several modules and devices are possible.

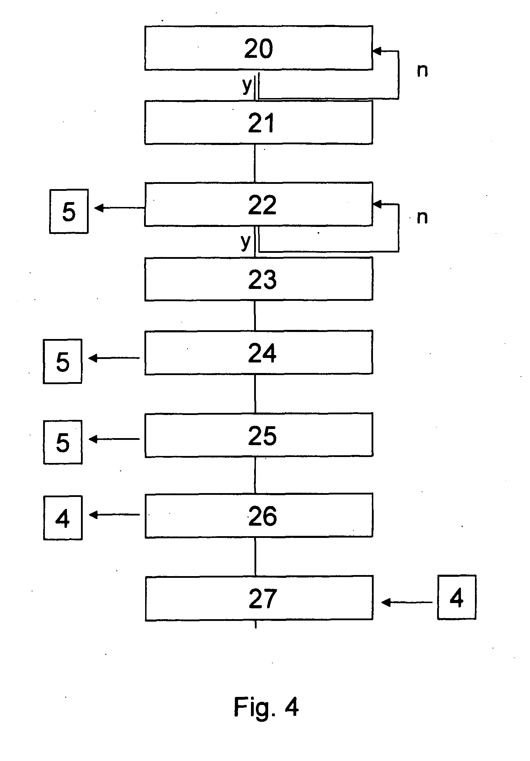

Fig. 4 is a flowchart of a segment of the program for the controller 1. A first step 20 of the program segment decides whether or not an accident-occurrence indicating signal is received. When an accident-occurrence indicating signal is not received, the step 20 is repeated. On the other hand, when an accident-occurrence indicating signal is received, the program advances from the step 20 to a step 21.

The step 21 feeds a signal of a connection requirement to the communication device 5. Thereby, the step 21 requires the communication device 5 to execute a step of establishing radio connection with the emergency center.

Step 22 decides whether or not radio connection between the communication device 5 and the emergency center has been established by referring to information fed from the communication device 5. When radio connection has not yet been established, the step 22 is repeated. On the other hand, when radio connection has been established, the program advances from the step 22 to a step 23.

The step 23 reads out the data of the current vehicle position from the memory. A step 24 following the step 23 feeds the data of the current vehicle position to the communication device 5. A step 25 subsequent to the step 24 controls the communication device 2, thereby transmitting the data of the current vehicle position from the communication device 2 to the emergency report receiving center by radio on a data communication basis. With the feed back of emergency center that the position data are well received controller goes to step 26 and start the video record. In step 27 the video record data are connected to the communication device 5 to be transferred to emergency center too.

In another embodiment of the invention the communication device is a mobile communication device, a normal mobile phone for example, that is connected to the vehicle's security device. This connection is possible via diverse interfaces as a fixed car set for the mobile phone or a special retainer connected to the security device 6 or a Bluetooth interace. In case of emergency the controller trigger a number dial with a fixed emergency center call number.

In this embodiment of the invention a bidirectional communication between passengers and the emergency center can be established. This solution has the advantage that the support persons at the emergency center can ask for details to improve the level of support. In addition the mobile phone has an electrical powering system independent from the vehicle. In special cases an accident will interrupt electrical connections. If for example the interior mirror with is destroyed the communication using a GSM module 11 is impossible. In this case the mobile phone can at least establish a voice communication to emergency center.

In detail the program running on the controller 1 is modified. The communication device 5 is activated in step 22. In this case the controller triggers the mobile phone to dial the emergency center number. An additional step is also established. After step 27 in which the video record data are connected to the communication device 5 to be transferred to emergency center, step 28 follows. In step 28 the video data transmitting is disconnected after a pre-defined time or after pre-defined numbers of frames and the bi directional voice connection is established.

Another preferred embodiment replaces the sensing of a full video stream by using a video picture or less expensive a photo sensor to sent out single pictures succeeding recorded.

Both video streams or single pictures are sent by using multimedia messaging service MMS.MMS is a part of the 3GPP (third Generation Partnership Program) standards developed for GSM and UMTS communication. MMS-enabled mobile phones enable subscribers to compose and send messages with one or more multimedia parts. Multimedia parts may include text, images, audio and video. These content types should conform to the MMS Standards. For example a phone can send an MPEG-4 video in AVI format, but the other party who is receiving the MMS may not be able to interpret it. To avoid this, all mobiles should follow the standards defined by OMA. Mobile phones with built-in or attached cameras, or with built-in MP3 players are very likely to also have an MMS messaging client-a software program that interacts with the mobile subscriber to compose, address, send, receive, and view MMS messages.

The advantage of the invention emergency system is that the communication devices are flexible. The emergency system works with each of the known or planned communication devices and makes the driver independent from the new development and from the need to adapt emergency system to a changed communication environment.

## Claims

1. A security system for a vehicle including a remote emergency centre reachable by a mobile connection, a security device (6) installed in the vehicle including a controller (1), a GPS receiver (2), at least one accident sensor (3), at least one video sensor (4,9) and a radio communication mean (5), wherein the radio communication mean (5) is sending in case of an accident, **characterized in that** the radio communication mean (2) enables the transmission of video stream information of the vehicle interior to the emergency centre.

2. A security system according claim 1 **characterized in that** the at least one video sensor (9) is placed in the interior mirror of the vehicle.

3. A security system according claim 2 **characterized in that** the interior mirror of the vehicle comprise the GPS receiver (10) and a radio communication mean (11).

4. A security system according claim 1 **characterized in that** the video signal is sent in a MMS format.

5. A security system according claim 1 **characterized in that** the communication mean (5) establishes a voice communication.

6. A security system according claim 1 **characterized in that** the communication device is a mobile phone.

7. Method to run a security system in a vehicle including a security device installed in the vehicle with a controller, a GPS receiver, at least one accident sensor, at least one video sensor and a radio communication mean, wherein the radio communication mean is sending in case of an accident, **characterized by** the steps:
Deciding that an accident was happening (20)
Connecting the communication device (21)
Establishing a radio communication (22)
Reading the position data of the vehicle (23)
Sending the position to emergency center (24)
Controlling the communication (25)
Starting video record (26)
Sending video data (27)

## Patentansprüche

1. Sicherheitssystem für ein Fahrzeug, umfassend eine entfernte Notrufzentrale, die durch eine Mobilverbindung erreichbar ist, eine im Fahrzeug installierte Sicherheitsvorrichtung (6), die eine Steuerung (1), einen GPS-Empfänger (2), mindestens einen Unfallsensor (3), mindestens einen Videosenso-(4, 9) und ein Funkkommunikationsmittel (5) umfasst, wobei das Funkkommunikationsnittel (5) im Falle eines Unfalls sendet, **dadurch gekennzeichnet, dass** das Funkkommunikutionsmittel (2) die übertragung von Videostrominformationen des Fahrzeuginneren zur Notrufzentrale ermöglicht.

2. Sicherheitssystem nach Anspruch 1, **dadurch gekennzeichnet, dass** der mindestens eine Videosensor (9) im Innenspiegel des Fahrzeugs angeordnet ist.

3. Sicherheitssystem nach Anspruch 2, **dadurch gekennzeichnet, dass** der Innenspiegel des Fahrzeugs den GPS-Empfänqer (10) und ein Funkkommunikutionsmittel (11) umfasst.

4. Sicherheitssystem, nach Anspruch 1, **dadurch gekennzeichnet, dass** das Videosignal in einem MMS-Format gesendet wird.

5. Sicherheitssystem nach Anspruch 1, **dadurch gekennzeichnet, dass** das Funkkommunikationssystem (5) eine Sprachverbindung herstellt.

6. Sicherheitssystem nach Anspruch 1, **dadurch** gekenntzeichnet, dass die Kommunikationsvorrichtung ein Mobiltelefon ist.

7. Verfahren zum. Betreiben eines Sicherheitssystems in einem Fahrzeug, das eine im Fahrzeug installiert Sicherheitsvorrichtung mit einer Steuerung, einem GPS-Empfänger, mindestens einem Unfallsensor, mindestens einem Videosensor und einem Funkkonmunikationsmittel umfasst, wobei das Funkkommunikationsmittel im Falle eines Unfalls sendet, **gekennzeichnet durch** die folgenden Schritte:
Entscheiden, dass ein Unfall geschehen ist (20);
Verbinden der Kommunikationsvorrichtung (21);
Herstellen einer Funkverbindung (22);
Auslesen der Positionsdaten des Fahrzeugs (23);
Sonden der Position an die Notrufzentrale (24);
Steuern der Kommunikation (25);
Starten einer Videoaufnahme (26);
Senden von Videodaten (27).

## Revendications

1. Système de sécurité pour un véhicule incluant un centre d'urgence à distance pouvant être contacté par une connexion mobile, un dispositif de sécurité (6) installé dans le véhicule incluant un contrôleur (1), un récepteur GPS (2), au moins un capteur d'accident (3), au moins un capteur vidéo (4, 9) et un moyen de communication radio (5), dans lequel le moyen de communication radio (5) émet en cas d'accident, **caractérisé en ce que** le moyen de communication radio (2) permet la transmission d'informations de flux de données vidéo de l'intérieur du véhicule vers le centre d'urgence.

2. Système de sécurité selon la revendication 1, **caractérisé en ce que** l'au moins un capteur vidéo (9) est placé dans le rétroviseur intérieur du véhicule.

3. Système de sécurité selon la revendication 2, **caractérisé en ce que** le rétroviseur intérieur du véhicule comprend le récepteur GPS (10) et un moyen de communication radio (11).

4. Système de sécurité selon la revendication 1, **caractérisé en ce que** le signal vidéo est envoyé dans un format MMS.

5. Système de sécurité selon la revendication 1, **caractérisé en, ce que** le moyen de communication (5) établit une communication vocale.

6. Système de sécurité selon la revendication 1, **caractérisé en ce que** le dispositif de communication est un téléphone portable.

7. Procédé pour faire fonctionner un système de sécurité dans un véhicule incluant un dispositif de sécurité installé dans le véhicule avec un contrôleur, un récepteur GPS, au moins un capteur d'accident, au moins un capteur vidéo et un moyen de communication radio, dans lequel le moyen de communication radio émet en cas d'accident, **caractérisé par** les étapes consistant à :
décider qu'un accident s'est produit (20) connecter le dispositif de communication (21) établir une communication radio (22) lire les données de positon du véhicule (23) envoyer la position au centre d'urgence (24) contrôler la communication (25) démarrer l'enregistrement vidéo (26) envoyer des données vidéo (27).
